# EUROPEAN PATENT APPLICATION

(11) **EP 4 108 476 A1**
(43) Date of publication of application: **28.12.2022**
(21) Application number: 22180357.0
(22) Date of filing: 22.06.2022
(51) Int. Cl.: B60C 15/04

(54) **BEAD STRUCTURE FOR A TIRE**

(30) Priority: 24.06.2021 US 202117356593
(71) Applicant: The Goodyear Tire & Rubber Company, Akron, OH 44316 (US)
(72) Inventor: KISH, James Christopher, Akron, 44319 (US)
(74) Representative: Goodyear IP Law

(57) **Abstract**

A tire comprising one or more carcass plies (3) extending from one bead structure to another bead structure of the tire (99) is disclosed. Each bead structure comprises at least one circumferentially wound sheath layer surrounding a bead core (101). The bead core (101) has a triangular cross-section. The cross-section has two radially inner rounded vertices (121, 221, 321, 421) having a first inner radius of curvature (123, 223, 323, 445) and a second inner radius of curvature (123, 223, 323, 443) respectively and a radially outer rounded vertex (131, 231, 331, 431) having a third inner radius of curvature (133, 233, 333, 443). The first radius of curvature defines a first circle having a first center point, the second radius of curvature defines a second circle having a second center point, and the third radius of curvature defines a third circle having a third center point, and the line connecting the first center point and the second center point defines a perpendicular bisector of said line crossing said line at an intersection point. In one aspect, said first inner radius of curvature is larger than said second and said third inner radius of curvature, or said third radius of curvature is larger than said first and said second inner radius of curvature. In another aspect, the line connecting said third center point with said intersection point is parallel to said perpendicular bisector, or the line connecting said third center point with said intersection point makes an angle with said perpendicular bisector in a range of from 0 to 25 degrees.

## Description

### Field of the Present Invention

The present invention relates to a tire intended to support vehicles and, more specifically, to a bead structure of such a tire.

### Background of the Present Invention

A conventional tire, pneumatic or non-pneumatic, includes a crown part surmounted radially on the outside by a tread intended to come into contact with the roadway, this crown part extending radially inward by sidewalls ending in bead structures. The tire includes a plurality of reinforcement armatures including, in particular, a carcass reinforcement for supporting loads created by the tire internal inflation pressure and the vehicle. This carcass reinforcement extends into the crown and the sidewalls of the tire and is anchored at its ends to appropriate anchoring structures located in the bead structures. A carcass reinforcement may be generally made up of a plurality of reinforcing members arranged parallel to one another and making an angle of, or in the region of, 90 degrees with the circumferential direction (in which case, the carcass reinforcement is said to be "radial"). The carcass reinforcement is usually anchored by turning it up around an anchoring structure of appropriate circumferential rigidity in order to form a turned-up portion of which the length, measured for example with respect to the radially innermost point of the anchoring structure, may be chosen to provide the pneumatic tire with satisfactory durability. Axially between the turned-up portion and the carcass reinforcement may be one or more elastomer-based materials which provide a mechanical coupling between the turned-up portions and the main carcass reinforcement.

In use, the tire may be mounted on a rim with rim seats intended to contact the radially innermost parts of the bead structures. On the axially outer side of each rim seat, a rim flange may fix the axial position of each bead structure when the tire is fitted onto the rim. In order to withstand the mechanical stresses of rotating under load, additional reinforcements may be provided for reinforcing the bead structures. For example, plies may be arranged against at least a part of the turned-up portion of the carcass reinforcement. During use, the bead structures may be subjected to a great many bending cycles, thereby conforming/deforming themselves to the rim flanges (e.g., partially adopting the geometry of the rim flanges). This results in greater or lesser variants in curvature of the bead structures combined with variations in tension in the reinforcement armatures that reinforce the bead structures and, in particular, in the turned-up portion of the carcass reinforcement. These same cycles may induce compressive and tensile loadings in the materials of the bead structures. Also, the reinforcing members of the carcass ply may shift circumferentially and cyclically in the sidewalls and the bead structures of the tire. A cyclic circumferential shift is a shift in one circumferential direction and in the opposite circumferential direction each time the wheel and tire revolve about a position of equilibrium (or no shift).

Stresses and/or deformations may be generated within the materials of the bead structures, and particularly within the elastomeric materials in the immediate vicinity of the ends of the reinforcements (the ends of the turned-up portions of the carcass reinforcement, or ends of the additional reinforcements). These stresses and/or deformations may lead to an appreciable reduction in the operating/service life of the tire.

These stresses and/or deformations may cause delamination and cracking near the ends of the reinforcements and degradation of tire performance. Because of the radial direction of some of the reinforcing members and because of the nature of the reinforcing members (e.g., metal cables), the turned-up ends of the carcass reinforcement may be particularly sensitive to this phenomenon.

### Summary of the Present Invention

The invention relates to a tire in accordance with claim 1.

Dependent claims refer to preferred embodiments of the invention.

A tire in accordance with a preferred aspect of the present invention includes a carcass ply extending from one bead structure to another bead structure. Each bead structure includes a plurality of circumferentially wound sheath layers surrounding a bead core with a triangular or substantially triangular cross-section. The cross-section has two radially inner vertices and a radially outer vertex. The radially outer vertex and one of the radially inner vertices are an angular amount radially offset from a directly radial direction of the tire. According to one aspect of the tire, the angular amount is 0 degrees. According to another aspect of the tire, the angular amount is between 5 degrees and 15 degrees. According to yet another aspect of the tire, the angular amount is 10 degrees. According to still another aspect of the tire, the angular amount is between 15 degrees and 25 degrees. According to yet another aspect of the tire, the angular amount is 20 degrees.

According to a preferred aspect of the invention, one of the radially inner vertices has a radius of curvature larger than both a radius of curvature of the other radially inner vertex and a radius of curvature of the radially outer vertex.

According to a preferred aspect of the invention, a radius of curvature of the radially outer vertex is larger than radii of curvature of both the radially inner vertices.

According to a preferred aspect of the invention, one of the radially inner vertices has a radius of curvature between 40% and 60% larger than both a radius of curvature of the other radially inner vertex and a radius of curvature of the radially outer vertex.

According to a preferred aspect of the invention, a radius of curvature of the radially outer vertex is between 40% and 60% larger than radii of curvature of both the radially inner vertices.

### Brief Description of the Drawings

Further features and advantages of the present invention will become apparent from the description given hereinafter, with reference to the attached drawings which, by way of non-limiting examples, show some embodiments of the subject matter of the present invention.
FIG. 1 shows a schematic representation of a tire with a bead core structure in accordance with the present invention;
FIG. 2 shows a schematic representation of the bead core of FIG. 1;
FIG. 3 shows a schematic representation of another bead core structure in accordance with the present invention;
FIG. 4 shows a schematic representation of still another bead core structure in accordance with the present invention; and
FIG. 5 shows a schematic representation of yet another bead core structure in accordance with the present invention.

### Definitions

The following definitions are controlling for the present invention.
"Axial" and "axially" are used herein to refer to lines or directions that are parallel to the axis of rotation of the tire.

"Bead" or "bead portion" means that part of the tire comprising an annular tensile core wrapped by ply cords and shaped, with or without other reinforcement elements such as flippers, chippers, apexes, toe guards and chafers, to fit a design rim. The annular tensile core may be hollow, single-piece, monolithic, and/or of any suitable material, such as metal, ceramic, polymer, carbon, carbon fibers, polyamide, glass, and/or glass fibers.

"Circumferential" means lines or directions extending along the perimeter of the surface of the annular tire parallel to the Equatorial Plane (EP) and perpendicular to the axial direction.

"Equatorial plane (EP)" means the plane perpendicular to the tire's axis of rotation and passing through the center of its tread; or the plane containing the circumferential centerline of the tread.

"Radial" and "radially" are used to mean directions radially toward or away from the axis of rotation of the tire.

"Turnup end" means the portion of a carcass ply that turns upward (i.e., radially outward) from the beads about which the ply is wrapped.

### Description of Preferred Embodiments of the Present Invention

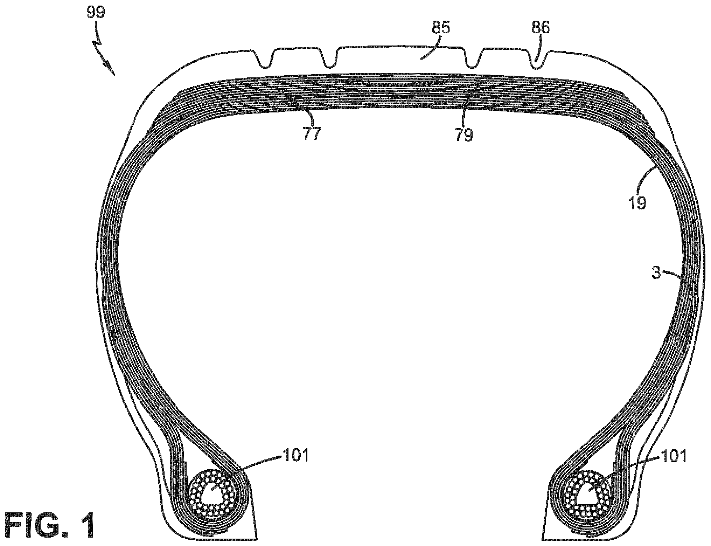

With reference to FIG. 1, an example tire 99 for use with the present invention may have an air impervious inner liner 19, at least two axially inner plies, as shown three of these plies 3 extending across the crown region of the tire 99 into the bead area having bead cores 101 and wrap about the bead cores extending to terminal ends. These terminal ends may be covered by axially outer plies, which extend from bead to bead to ends that lie under the bead core 101.

The entire cross section of the tire 99 is shown in FIG. 1. The crown reinforcement 77 may be formed of several belt layers 79 and have an axial maximum belt width as measured between the maximum width belt edges of the crown reinforcement 77. The crown reinforcement 77 may have cords aligned at an angle between 0 and 45 degrees relative to the circumferential direction of the tire 99. Radially outward of the crown reinforcement 77 may be a rubber tread 85 having a plurality of circumferential grooves 86 for water drainage.

Conventional radial aircraft tires may have cable beads. The predominant shape of available bead cores is typically circular. A metal or polymer rod may be bent/molded into a circle and welded/fused to form a hoop. Recent manufacturing advances have provided new techniques for forming a bead core, such as 3D printing, molding of composites, etc. This may allow bead shape to be designed without the limitations of many industry standards. A triangular or semi-triangular shape for a bead core, in accordance with the present invention, allows it to provide a more stable fitment between tire and rim (e.g., greater ply durability, less rim slip, etc.). Circular beads interact with the rim at a point type of contact (round dowel surface on flat surface).

However, one flat side of a semi-triangular bead may be parallel to rotation of the wheel and create more widely distributed stresses (flat surface on flat surface). As a result, a triangular or semi-triangular bead allows it to anchor the tire plies more securely to the rim. Clamping the ply more like two faces of bench vise, over life of tire, may mitigate or prevent motion of the bead relative to the rim and thereby prevent plies nearest the bead from over working, possibly separating, and/or eventually breaking. Depending on the material type chosen, reduction in weight of the bead structure and the overall tire may be achieved.

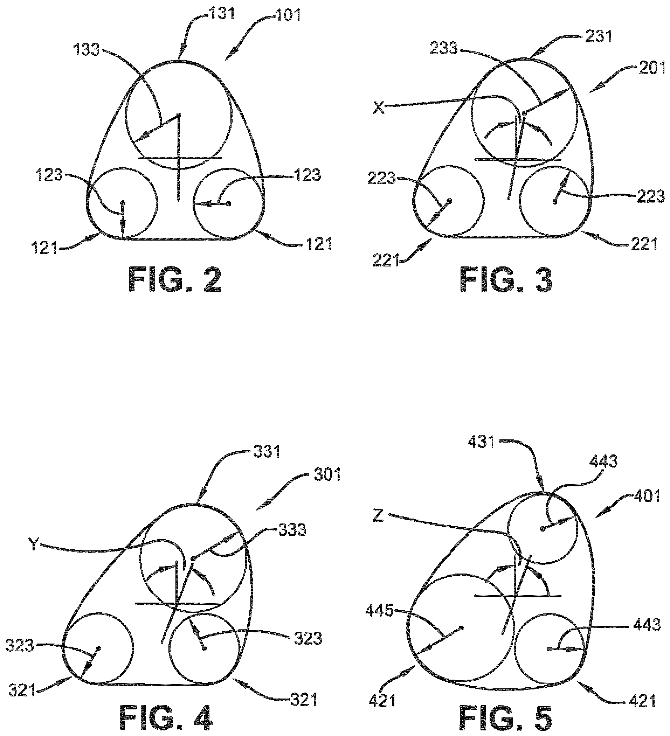

The radially outer top of the triangular or semi-triangular shape may thus be wider at the bottom than at the top. The top of the triangular shape may also be directly axially centered over the base of the bead structure or may be axially offset (e.g., a leaning triangle; FIG. 5). A leaning triangular bead shape may thereby coincide with a natural ply line of a lower sidewall of tire. The corners of a semi-triangular bead core may also have radii, as well.

In accordance with the present invention, FIGS. 1 and 2 schematically show an isosceles semi-triangular bead core 101 with the two radially inner vertices 121 having a common bottom radius 123 and the radially outer/top vertex 131 having a larger top radius 133. The larger top radius 133 may be between 40% and 60%, or 50% larger than the bottom radii 123. The radially outer/top vertex 131 may be 0 degrees radially offset from, or coincident with, the radial direction.

In accordance with the present invention, FIG. 3 schematically shows a "leaning" semi-triangular bead core 201 with the two radially inner vertices 221 having common bottom radii 223 and a radially outer/top vertex 231 having a larger top radius 133 and offset axially directly outward by X degrees. The larger top radius 233 may be between 40% and 60%, or 50% larger than the bottom radii 223. X may be between 5 degrees and 15 degrees, or 10 degrees. A non-zero degree offset may require specific staging procedures of beads during tire manufacturing.

In accordance with the present invention, FIG. 4 schematically shows a "leaning" semi-triangular bead core 301 with the two radially inner vertices 321 having common bottom radii 323 and a radially outer/top vertex 331 having a larger top radius 333 and offset axially directly outward by Y degrees. The larger top radius 333 may be between 40% and 60%, or 50% larger than the bottom radii 323. Y may be between 15 degrees and 25 degrees, or 20 degrees. A non-zero degree offset may require specific staging procedures of beads during tire manufacturing.

In accordance with the present invention, FIG. 5 schematically shows a "leaning" semi-triangular bead core 401 with one of the two radially inner vertices 421 (e.g., the heel radius, etc.) and a radially outer/top vertex 431 having common radii 443 and the other of the two radially inner vertices 421 (e.g., the toe vertex, etc.) having a larger radius 435 between 40% and 60%, or 50% larger than the common radii 343. The radially outer/top vertex 431 may be offset to axially directly outward by Z degrees. Z may be between 15 degrees and 25 degrees, or 20 degrees. A non-zero degree offset may require specific staging procedures of beads during tire manufacturing.

## Claims

1. A tire comprising one or more carcass plies (3) extending from one bead structure to another bead structure of the tire (99), each bead structure comprising at least one circumferentially wound sheath layer, preferably a plurality of circumferentially wound sheath layers, surrounding a bead core (101) in the respective bead area, wherein the bead core (101) has a triangular or substantially triangular cross-section, the cross-section having two radially inner rounded vertices (121, 221, 321, 421) having a first inner radius of curvature (123, 223, 323, 445) and a second inner radius of curvature (123, 223, 323, 443) respectively and a radially outer rounded vertex (131, 231, 331, 431) having a third inner radius of curvature (133, 233, 333, 443), the first radius of curvature defining a first circle having a first center point, the second radius of curvature defining a second circle having a second center point, and the third radius of curvature defining a third circle having a third center point, and the line connecting the first center point and the second center point defining a perpendicular bisector of said line crossing said line at an intersection point;
(i) wherein said first inner radius of curvature is larger than said second and said third inner radius of curvature, or wherein said third radius of curvature is larger than said first and said second inner radius of curvature; and/or
(ii) wherein the line connecting said third center point with said intersection point is parallel to said perpendicular bisector, or wherein the line connecting said third center point with said intersection point makes an angle with said perpendicular bisector in a range of from 0 to 25 degrees.

2. The tire of claim 1 wherein the perpendicular bisector is parallel to the radial direction of the tire (99).

3. The tire of claim 1 or 2 wherein the line connecting the first center point and the second center point is parallel to the axial direction of the tire (99).

4. The tire in accordance with claim 1, 2 or 3 wherein said angle is in a range of from 5 to 25 degrees.

5. The tire in accordance with claim 4 wherein said angle is in a range of from 5 to 15 degrees or is 10 or 20 degrees.

6. The tire in accordance with at least one of the previous claims wherein said first inner radius of curvature is in a range of from 40 to 60% larger than said second and said third inner radius of curvature.

7. The tire in accordance with at least one of the previous claims 1 to 5 wherein said third inner radius of curvature is in a range of from 40 to 60% larger than said first and said second inner radius of curvature.

8. The tire in accordance with at least one of the previous claims wherein said angle is 0 degrees, said first and second inner radius of curvature are the same, and said third inner radius of curvature is in a range of from 40 to 60% larger than said first and second inner radius of curvature.

9. The tire in accordance with at least one of the previous claims 1 to 7 wherein said angle is in a range of from 5 to 25 degrees, said first and second inner radius of curvature are the same, and said third inner radius of curvature is in a range of from 40 to 60% larger than said first and second inner radius of curvature.

10. The tire in accordance with at least one of the previous claims 1 to 7 wherein said angle is 0 degrees, said second and third inner radius of curvature are the same, and said first inner radius of curvature is in a range of from 40 to 60% larger than said second and third inner radius of curvature.

11. The tire in accordance with at least one of the previous claims 1 to 5 wherein said angle is in a range of from 5 to 25 degrees, said second and third inner radius of curvature are the same, and said first inner radius of curvature is in a range of from 40 to 60% larger than said second and third inner radius of curvature.

12. The tire in accordance with at least one of the previous claims wherein the tire (99) is an aircraft tire, preferably a radial aircraft tire, and comprises a plurality of said carcass plies (3).

13. The tire in accordance with at least one of the previous claims wherein the tire (99) is a pneumatic tire.
